# NEUE EUROPÄISCHE PATENTSCHRIFT

(11) **EP 0 716 214 B2**
(45) Veröffentlichungstag und Bekanntmachung des Hinweises auf die Entscheidung über den Einspruch: **21.02.2007**
(45) Hinweis auf die Patenterteilung: 10.09.2003
(21) Anmeldenummer: 95117754.2
(22) Anmeldetag: 10.11.1995
(51) Int. Cl.: E06B 9/88

(54) **Verfahren und Vorrichtung zur Stillstandssteuerung von elektromotorisch betriebenen Rolläden oder dergleichen**
Method and device for controlling the stopping of electric motor driven roller shutters or the like
Procédé et dispositif pour contrôler l'arrêt d'un volet roulant ou similaire entraîné par un moteur électrique

(30) Priorität: 14.11.1994 DE 4440449
(43) Veröffentlichungstag der Anmeldung: 12.06.1996
(73) Patentinhaber: elero GmbH, 72660 Beuren (DE)
(72) Erfinder: Wolfer, Hermann, D-73252 Lenningen (DE); Walddörfer, Dieter, D-73252 Lenningen (DE)
(74) Vertreter: Patentanwälte Westphal, Mussgnug & Partner

(56) Entgegenhaltungen:
- EP-A- 0 083 947
- EP-A- 0 497 711
- EP-A- 0 552 459
- EP-A- 0 573 388
- DE-A- 3 933 266
- GB-A- 2 228 581
- US-A- 4 585 981
- US-A- 5 198 974
- US-A- 5 278 480

## Beschreibung

Die Erfindung betrifft ein Verfahren zur Stillstandssteuerung von einen Elektromotor enthaltenden Antrieben für Rolläden, Rolltoren, Jalousien, Markisen, Filmleinwänden und dergleichen gemäß dem Oberbegriff des Anspruchs 1 und eine Vorrichtung zur Durchführung eines solchen Verfahrens.

Bei elektrisch betriebenen Rolläden, Rolltoren, Jalousien, Markisen, Filmleinwänden oder dergleichen, werden in bekannter Weise über einstellbare mechanische Begrenzungsendschalteinrichtungen die gewünschten Endpositionen eingestellt. Beispiele solcher Antriebe sind aus DE 30 11 706 C2 und DE 44 02 524 C2 bekannt. Bei diesen bekannten Antrieben wird die Antriebswelle des Antriebs über sogenannte Wellen-Endschalter in einer oberen und unteren Endlage angehalten. Zum Justieren eines solchen Wellen-Endschalters verfügt dieser regelmäßig über Einstelldrücker, durch welche die Relativstellung von Nockenrädern innerhalb des Wellen-Endschalters festlegbar sind. Zum Einstellen der unteren Endlage muß der Rolladen oder dergleichen nach unten gefahren und kurz vor Erreichen der beabsichtigten unteren Endlage der für das Ausschalten zuständige Einstelldrücker gedrückt werden. Bei der Einstellung der oberen Endlage der Jalousie wird analog vorgegangen.

Solche Wellen-Endschalter sind verhältnismäßig kompliziert aufgebaut und können, je nach baulichen Gegebenheiten, oft nur aufgrund schwieriger Zugriffsmöglichkeiten erschwert justiert werden. Darüber hinaus ist es mit solchen bekannten Wellen-Endschaltern bisher nicht möglich, die Rollläden und dergleichen während dem Auf- bzw. Abwickeln vor Beschädigung zu schützen. Wird der Rolladen nämlich bei seiner Aufoder Abbewegung aus irgendwelchen Gründen geklemmt oder blokkiert, so erfolgt mit den bekannten Wellen-Endschaltern kein Abschalten des Antriebs, da diese nur zur Endlagenabschaltung dienen. Der Antrieb läuft daher weiter und kann somit den angetriebenen Gegenstand beschädigen und im Extremfall sogar zerstören.

Ein weiteres Problem stellt eine mögliche Vereisung des zu betätigenden Rolladens oder dergleichen dar, wenn dieser z.B. in seiner unteren Endstellung festfriert. Beim Einschalten des Elektromotors wird dieser ebenfalls aufgrund der hohen Belastung stark erhitzt und die thermische Sicherung setzt ein. Der angetriebene Gegenstand kann auch hierbei beschädigt werden.

Verfahren und Vorrichtungen zur Stillstandssteuerung von elektromotorisch betriebenen Rollläden oder dgl. sind z.B. aus EP 0552459 A1 und DE 39 33 266 A bekannt.

Der Erfindung liegt die Aufgabe zugrunde, ein Verfahren und eine Vorrichtung anzugeben, mit der unabhängig von Wellen-Endschaltern der Antrieb wirksam vor Beschädigungen geschützt wird.

Diese Aufgabe wird für das Verfahren durch die Merkmale des Anspruchs 1 und für die Vorrichtung durch die Merkmale des Anspruchs 9 gelöst.

Weiterbildungen der Erfindung sind Gegenstand der Unteransprüche.

Das Verfahren gemäß Anspruch 1 beruht im wesentlichen darauf, das Drehmoment des Elektromotors bei eingeschaltetem Elektromotor laufend elektronisch zu erfassen und den Elektromotor sowohl bei Überschreitung eines vorgegebenen Drehmomentes als auch bei Überschreitung einer vorgegebenen Drehmomentänderung abzuschalten. Durch das Erfassen des Drehmomentes des Elektromotors beim Auf- bzw. Abwickeln des Rolladens oder dergleichen können sowohl sprunghafte Veränderungen des Drehmomentes als auch ein Überschreiten eines vorgegebenen maximalen Drehmomentwertes überwacht werden. Gelangt der Rolladen oder dergleichen in seine obere oder untere Endlage tritt eine Drehmomentänderung ein, was von einer geeigneten Detektionseinrichtung mit zugehörender Steuereinrichtung erkannt wird und das gesteuerte Abschalten des Elektromotors zur Folge hat. Es ist darüber hinaus in einfacher Weise möglich, an den unteren und oberen Endpositionen, an denen der Rolladen und dergleichen stehenbleiben soll, Anschlagleisten für den Rolladen vorzusehen. Sobald der Rolladen an diesen Anschlagleisten anschlägt, verändert sich das Drehmoment des Elektromotors, was detektiert wird. Wellen-Endschalter können zwar verwendet werden, sind jedoch nicht mehr zwingend notwendig.

Darüber hinaus wird durch das erfindungsgemäße Verfahren sichergestellt, daß bei einem Verklemmen oder Blockieren des Rolladens oder dergleichen während der Auf- bzw. Abbewegung aufgrund des sich im Elektromotor einstellenden höheren Drehmomentes bzw. der hierdurch bedingten Drehmomentänderung ein sicheres Abschalten des Elektromotors die Folge ist. Durch dieses Sicherheitsabschalten wird eine Überhitzung des Motors in wirksamer Weise vermieden und eine Beschädigung des angetriebenen Gegenstandes ausgeschlossene.

Nach dem Abschalten des Motors durch Unterschreitung dieser vorgegebenen Drehzahl der Wikkelwelle, durch Überschreitung des vorgegebenen Drehmomentes des Elektromotors oder der vorgegebenen Drehmomentenänderung des Elektromotors, wird erfindungsgemäß die unmittelbar vor dem Abschalten geltende Drehrichtung des Elektromotors gesperrt. Hierdurch wird wirksam verhindert, daß bei einem Neuanlauf des Elektromotors dieser nicht mehr in die gesperrte Richtung weitergedreht werden kann.

In einfacher Weise kann das vorgegebene Drehmoment, bei dessen Überschreitung der Elektromotor abgeschaltet wird, aus einer in einem nichtflüchtigen Datenspeicher hinterlegten und auf den speziellen Elektromotor abgestimmten und die aktuelle Betriebsspannung des-Elektromotors berücksichtigenden Tabelle in eine Steuereinrichtung eingelesen werden. Hierdurch wird sichergestellt, daß das vorgegebene Drehmoment auf die aktuellen Betriebsbedingungen angepaßt ist.

Eine besonders einfache Weise, die Belastung und damit das Drehmoment des Elektromotors zu erfasssen, besteht darin, die Phasenverschiebung des durch die Phasenwicklungen des Elektromotors fließenden Stromes auszuwerten. Verfügt der Elektromotor über mindestens zwei Phasenwicklungen und einen Motorkondensator, so kann aus der Phasenverschiebung des durch diese zwei Phasenwicklungen fließenden Stromes auf das aktuelle Drehmoment des Elektromotors rückgeschlossen werden. Eine geringe Phasenverschiebung deutet auf eine starke Belastung und eine hohe Phasenverschiebung auf eine geringe Belastung und damit ein geringes Drehmoment des Elektromotors hin.

Durch Erfassen der Phasenverschiebung zwischen den beiden Motorwicklungen kann auf einen separaten Sensor zur Drehzahl- bzw. Drehmomenterfassung verzichtet werden. Ein einfacher Aufbau der Vorrichtung zur Durchführung des erfindungsgemäßen Verfahrens ist die Folge.

In einer zweckmäßigen Weiterbildung der Erfindung wird nach dem Einschalten des Elektromotors die Phasenverschiebung zwischen den mindestens zwei Motorwicklungen erfaßt und gespeichert. Anschließend wird dieser gespeicherte Wert ständig aktualisiert, indem nach einem vorgegebenen Zeitintervall, das etwa 100 bis 800 ms betragen kann, ein neuer aktueller Wert gespeichert wird. Sobald eine vorgegebene, maximal zulässige Phasenverschiebungsänderung in bezug auf den unmittelbar zuvor gespeicherten Phasenverschiebungswert detektiert wird, veranlaßt die Steuereinrichtung das Abschalten des Elektromotors.

Es hat sich herausgestellt, daß das Erfassen des Drehmomentes des Elektromotors insbesondere bei schweren Rolläden, Rolltoren oder dergleichen ausreicht, um ein sicheres Kriterium zum Abschalten des Elektromotors bereitzustellen.

Weiterbildungen des erfindungsgemäßen Verfahrens dienen dazu, das Abschalten des Elektromotors noch sicherer zu gestalten.

Hierzu kann beispielsweise die Drehzahl der Wickelwelle, auf der der Rolladen sitzt und mit dem Antrieb über eine Wickelwellenkupplung in Verbindung steht, erfaßt werden. Bei Unterschreiten einer vorgegebenen Drehzahl der Wickelwelle wird ebenfalls der Elektromotor abgeschaltet. Die vorgegebene Drehzahl der Wickelwelle, bei der der Elektromotor abschaltet, wird vorzugsweise in Abhängigkeit der augenblicklichen Stellung des Rolladens oder dergleichen veränderbar gewählt.

In einer Weiterbildung der Erfindung wird zwischen der Wickelwelle und einer vom Antrieb unmittelbar angetriebenen Antriebswelle ein begrenztes Spiel eingebaut, durch welches die Antriebswelle trotz stehender Wickelwelle um das Spiel weiter drehbar ist. Ein Weiterdrehen dieser Antriebswelle um das Spiel bei Stillstehen der Wickelwelle dient ebenfalls als Kriterium zum Abschalten des Elektromotors.

Eine Vorrichtung zum Durchführen des Verfahrens zur Stillstandssteuerung von einen Elektromotorenthaltenden Antrieben für Rolläden oder dergleichen ist mit einer Stromversorgungseinrichtung, einer Schalteinrichtung zum Ein- und Ausschalten des Elektromotors und einer Steuereinrichtung zum Betätigen dieser Schalteinrichtung versehen. Darüber hinaus verfügt diese Vorrichtung über eine elektronische Einrichtung zum Erfassen der Drehbewegung des Elektromotors und insbesondere dessen Drehmomentes. Diese elektronische Einrichtung ist hierfür mit der Steuereinrichtung verbunden und führt dieser ein Ist-Signal für die aktuelle Drehbewegung bzw. das aktuelle Drehmoment des Elektromotors zu. Innerhalb der Steuereinrichtung, die bevorzugterweise ein Mikrocontroller ist, wird dieses Ist-Signal mit einem Referenzsignal verglichen und bei einer vorgegebenen Abweichung des Ist-Signals vom Referenz-Signal die Schalteinrichtung zum Abschalten des Elektromotors betätigt.

ZurSpeicherung von antriebsspezifischen Daten ist der Mikrocontroller mit einem nichtflüchtigen Datenspeicher verbunden.

Zur Erfassung des Drehmomentes bzw. der Drehbelastung dient eine Phasendifferenzmeßeinrichtung, durch welche die Phasenverschiebung des durch die mindestens zwei Phasenwicklungen des Elektromotors fließenden Stromes erfaßbar ist.

Zusätzlich kann die Steuereinrichtung mit einer Drehzahlerfassungseinrichtung zum Erfassen der Drehzahl der Wickelwelle ausgestattet sein.

Eine besonders zuverlässige und trotzdem einfache Ausführungsform für eine Drehzahlerfassungseinrichtung der Wickelwelle sieht einen mit der Wickelwelle drehfest verbundenen mehrpoligen Ringmagneten und einen Hallsensor zum Erfassen der durch den Ringmagneten bei dessen Drehung erzeugten Magnetfeldänderung vor. Die vom Hallsensor erfaßte Magnetfeldänderung bei Drehung des mehrpoligen Ringmagneten in Form von Flankenwechseln des Hallsensorausgangssignales ist ein direktes Maß fürdie Drehzahl der Wickelwelle und wird der Steuereinrichtung als Drehzahlsignal zugeführt.

In bevorzugter Weise ist der Antrieb für den Rolladen oder dergleichen als Einsteckrohrantrieb ausgebildet, wobei in dem Rohr des Einsteckrohrantriebes neben dem Motor, Getriebe, Motorkondensator, usw. auch die zugehörende Elektronik für die Stillstandssüberwachung untergebracht ist. Ein solcher Einsteckrohrantrieb unterscheidet sich rein äußerlich von herkömmlichen Einsteckrohrantrieben nicht. Allerdings kann die oft umständliche Einstellung der Wellen-Endschalter, mit denen ein solcher Einsteckrohrantrieb in der Vergangenheit regelmäßig ausgerüstet werden mußte, entfallen.

Der Einsteckrohrantrieb ist mit einer Wickelwellenkupplung versehen, welche vorzugsweise unter Spiel mit der Antriebswelle des Antriebes verbunden ist. Auf der Wickelwellenkupplung sitzt das Wickelwellenrohr auf. Innerhalb des Wickelwellenrohres ist der Einsteckrohrantrieb angeordnet, wobei das Wickelwellenrohr über einen Wickelwellenmitnahmering auf dem Einsteckrohrantrieb aufsitzt. Die elektronische Einrichtung zum Erfassen der Drehzahl der Wickelwelle ist über ein Getriebe oder einen Antrieb mit dem Wickelwellenmitnahmering direkt in Verbindung, so daß dessen Drehzahl erfaßt werden kann.

Um das erwähnte begrenzte Spiel zwischen Antrieb und Wickelwellenkupplung und damit Wickelwelle bereitzustellen, wird vorzugsweise die Wickelwellenkupplung als plattenförmiger Ring auf einen Austrieb der Antriebswelle des Einsteckrohrantriebes aufgesetzt. Der Austrieb ragt durch eine zentrale Öffnung dieses plattenförmigen Ringes, wobei der Austrieb im innerhalb der Öffnung liegenden Bereich einen Querschnitt aufweist, der eine begrenzte Drehbewegung und damit das begrenzte Spiel des Austriebes erlaubt. Als günstig hat sich eine zentrale Öffnung des plattenförmigen Ringes in rechteckförmiger und des Querschnittes des Austriebes in etwa trapezförmiger Gestalt erwiesen. Ebenso kann das Spiel innerhalb des Einsteckrohrantriebes eingebaut werden.

Die Erfindung wird nachfolgend anhand eines Ausführungsbeispieles im Zusammenhang mit Figuren näher erläutert. Es zeigen:
- Figur 1: eine Schnittdarstellung durch einen Einsteckrohrantrieb gemäß der Erfindung mit Einsteckrohr und Wickelwellen-Mitnahmekupplung in Seitenansicht,
- Figur 2: eine stirnseitige Draufsicht auf den in Figur 1 dargestellten Einsteckrohrantrieb auf der die Wickelwellen-Mitnahmekupplung enthaltenden Seite, und
- Figur 3: ein Blockschaltbild einer möglichen Schaltung zum Betreiben des Einsteckrohrantriebes gemäß Figur 1 und 2.

In den nachfolgenden Figuren bezeichnen, sofern nicht anders angegeben, gleiche Bezugszeichen gleiche Teile mit gleicher Bedeutung.

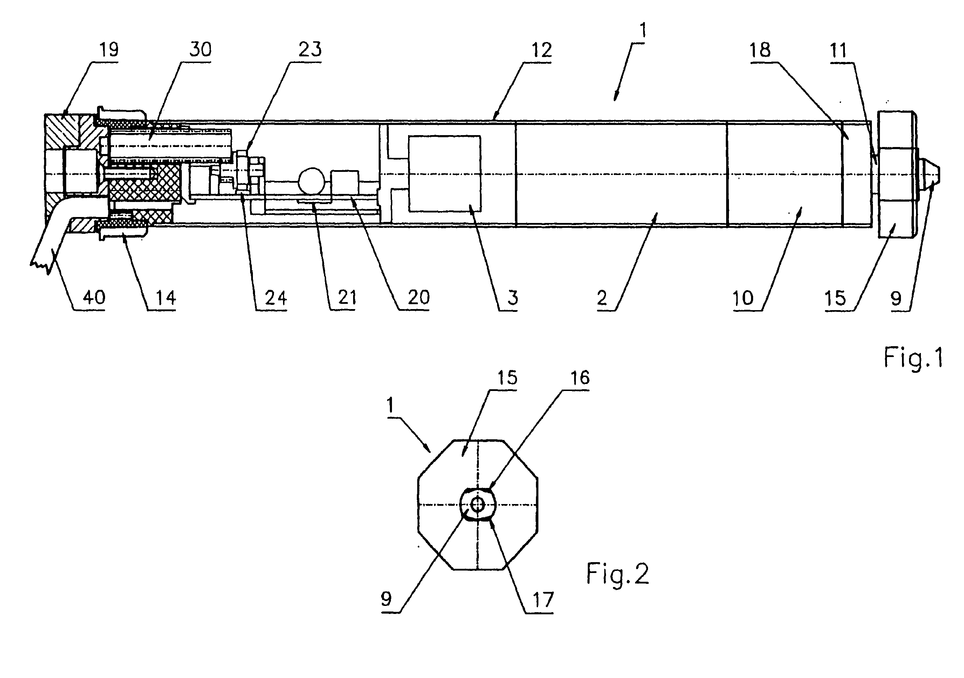

In Figur 1 ist ein Ausführungsbeispiel eines erfindungsgemäßen Antriebes zur Stillstandüberwachung für elektrisch-motorisch betriebene Rolläden, Rolltore, Markisen, Gegenzuganlagen, Filmleinwänden oder dergleichen gezeigt. Der Antrieb 1 ist als Einsteckrohrantrieb ausgebildet und weist ein rohrförmiges Gehäuse 12 auf, welches mit einem vorderen Deckelteil 18 und einem hinteren Deckelteil 19 stimseitig abschließt.

Innerhalb des Rohres 12 ist, von links her gesehen in Figur 1, eine Elektronik 20 mit Steuereinrichtung 21, insbesondere Mikrocontroller zur elektronischen Stillstandüberwachung des Einsteckrohrantriebes 1 angeordnet. Rechts von der Elektronik 20 sitzt ein Motorkondensator 3, gefolgt von einem Motor 2 mit nachfolgendem Getriebe 10.

Aus dem vorderen Deckelteil 18 ragt eine Antriebswelle 11, die in einem sogenannten Austrieb 9 endet. Auf dem Austrieb 9 sitzt eine Wickelwellenkupplung 15, die mit einer der Einfachheit halber nicht dargestellten Wickelwelle, an der der zu betätigende Rolladen oder dergleichen befestigt ist, verbunden ist. Auf der der Wickelwellenkupplung 15 gegenüberliegenden Seite des Einsteckrohrantriebes 1 sitzt ein Wickelwellenmitnahmering 14, der drehfest mit der Wickelwelle verbunden wird. Über ein eigenes Getriebe bzw. einen Antrieb 30 steht dieser Wickelwellenmitnahmering 14 mit einer Drehzahlerfassungseinrichtung zur Erfassung der Drehzahl der Wickelwelle in Verbindung. In der Darstellung von Figur 1 ist diese Drehzahlerfassungseinrichtung ein mehrpoliger Ringmagnet 23 mit Hallsensor24.

Zusätzlich ist in Figur 1 noch eine Zuleitung 40 dargestellt, die zur Stromversorgung der Elektronik 20 und des Elektromotors notwendig ist.

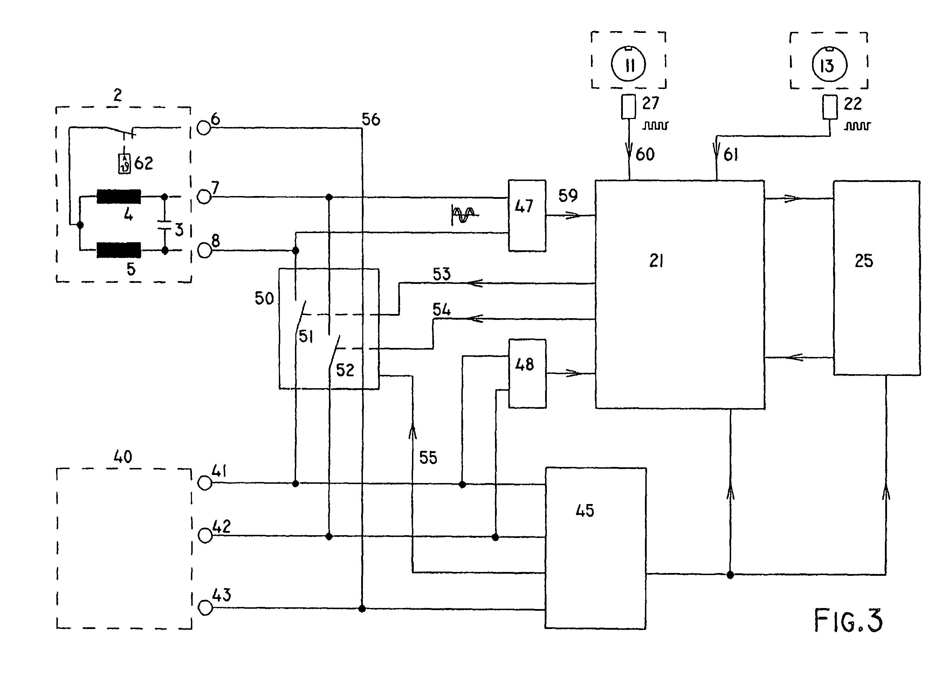

Die Funktionsweise eines solchen Einsteckrohrantriebes 1 wird im Zusammenhang mit dem in Figur 3 gezeigten Blockschaltbild erläutert.

Es hat sich als vorteilhaft erwiesen, die Wikkelwellenkupplung 15, die als plattenförmiger Ring ausgebildet ist und auf dem Austrieb 9 sitzt, mit einem begrenzten mechanischen Spiel auf dem Austrieb 9 anzuordnen. Dies ist für ein sicheres Abschalten des Elektromotors beim Antreiben von insbesondere verhältnismäßig leichten Rolläden, Jalousien oder dergleichen vorteilhaft, da das Weiterdrehen des Antriebes bei stillstehender Wickelwelle in der unteren Endlage als zusätzliches Abschaltkriterium für den Elektromotor herangezogen werden kann. Fällt beispielsweise die Drehmomentmessung des Elektromotores aus irgendwelchen Gründen aus, kann allein aufgrund der dem Elektromotor zugeführten Versorgungsspannung und der Kenntnis, daß die Wickelwelle stillsteht, ein Abschaltkriterium zum Abschalten des Elektromotors gewonnen werden.

In der Figur 2 ist ein Beispiel zur Bildung eines solchen begrenzten mechanischen Spieles zwischen Wickelwellenkupplung 15 und Austrieb 9 des Einsteckrohrantriebes 1 gezeigt. Die Wickelwellenkupplung 15 ist als plattenförmiger Ring mit oktogonaler Außenkontur gestaltet. Diese Wickelwellenkupplung 15 weist eine zentrale Öffnung 16 auf, die in etwa rechteckförmig gestaltet ist. In dieser Öffnung 16 liegt konzentrisch die Antriebswelle 11 mit ihrem Austrieb 9. Der Austrieb 9 weist eine Querschnittsform auf, die eine begrenzte Drehbewegung des Austriebes 9 innerhalb dieser Öffnung 16 erlaubt und somit das Spiel 17 zur Verfügung stellt. Als begrenztes Spiel hat sich eine Drehbewegung des Austriebes 9 von etwa 20 bis 40° als günstig erwiesen. Die Querschnittsform des Austriebes 9 ist in Figur 2 in etwa trapezförmig gestaltet. Dieses Spiel kann auch gefedert ausgeführt werden.

Das vorgesehene begrenzte Spiel dient auch für eine empfindlichere Auslösung des Abschaltens des Elektromotors.

In Figur 3 ist ein mögliches Blockschaltbild der Elektronik gezeigt, die in dem in Figur 1 dargestellten Einsteckrohrantrieb 1 untergebracht ist. Gleiche Bezugszeichen bezeichnen die bereits bekannten Teile. Der Elektromotor 2 weist zwei Motorwicklungen 4, 5 auf, die mit ihrem einen Anschluß miteinander verbunden sind und über einen Motorthermostat 62 an einen Motoranschluß 6 führen. Die beiden anderen Anschlüsse der Motorwicklungen 4, 5 sind über einen Motorkondensator 3 miteinander in Verbindung. Die beiden Klemmen dieses Motorkondensators 3 sind an zwei weitere Motoranschlüsse 7, 8 angeschlossen. Die Motoranschlüsse 6, 7, 8 stehen mit Zuleitungsanschlüssen 41, 42, 43 einer Zuleitung 40 in Verbindung. Die Zuleitung 40 stellt mit ihren Anschlüssen 41, 42 und 43 die notwendigen Ströme für einen Rechts- bzw. Linkslauf des Elektromotors 2 zur Verfügung. Im Ausführungsbeispiel von Figur 3 ist am Zuleitungsanschluß 41 die Phase für Rechtslauf, am Zuleitungsanschluß 42 die Phase für Linkslauf und am Zuleitungsanschluß 43 ein Neutralleiter angeschlossen. Der Motoranschluß 6 ist direkt mit dem Zuleitungsanschluß 43 in Verbindung, während die Motoranschlüsse 7 und 8 jeweils über Schalteinrichtungen 51, 52 mit den Zuleitungsanschlüssen 41, 42 in Verbindung stehen. Die Schalteinrichtungen 51, 52 sind Bestandteil einer Leistungsschalteinrichtung 50. Die Schalteinrichtungen 51, 52 können beispielsweise Relaisschalter sein. Darüber hinaus bietet sich auch eine Ansteuerung mit geeigneten Halbleiterschaltern, beispielsweise Triacs oder Thyristoren an. Der Vorteil von solchen Halbleiterschaltern liegt in der Möglichkeit einer Phasenanschnittsteuerung, durch die das Nennmoment des Elektromotors 2 in gezielter Weise beeinflußt werden kann, um eine Zerstörung des angetriebenen Gegenstandes zu vermeiden.

Der Vorteil einer solchen Verbindung des Elektromotors mit der Zuleitung 40 besteht in der Spannungsfreiheit des Motoranschlusses der jeweiligen Gegenrichtung. Soll beispielsweise der Elektromotor 2 rechtsdrehen, würde die Schalteinrichtung 51 geschlossen, während die Schalteinrichtung 52 geöffnet ist. Durch diese Spannungsfreiheit jeweils eines der Zuleitungsanschlüsse 41 bzw. 42 ist eine beliebige Parallelschaltungvon Elektromotoren möglich, wodurch höhere Drehmomente und damit größere Lasten durch mehrere Einsteckrohrantriebe bewegt werden könnten.

Gesteuert wird die Leistungsschalteinrichtung 50 durch Steuersignale auf Steuerleitungen 53, 54, die von einer Steuereinrichtung 21 zur Verfügung gestellt werden. Die Steuereinrichtung 21 ist zweckmäßigerweise ein Mikrocontroller mit angeschlossenem, vorteilhafterweise nichtflüchtigem Datenspeicher 25. Der Steuereinrichtung 21 werden verschiedene Sensorsignale zugeführt, um über die Steuerleitungen 53, 54 gezielt die Leistungsschalteinrichtung 50 und damit die Schalteinrichtungen 51, 52 ein- und auszuschalten. Im Ausführungsbeispiel von Figur 3 erhält die Steuereinrichtung 21 drei Sensorsignale, nämlich ein Ist-Signal 59 für die aktuelle Drehmomentbelastung des Elektromotors 2, ein Sensorsignal 60, das die Drehzahl der Antriebswelle 11 repräsentiert und ein Sensorsignal 61, welches ein Maß für die Drehzahl der Wickelwelle 13 ist. Die Sensorsignale 60 und 61 werden durch geeignete Drehzahlsensoreinrichtungen 22, 27 zur Verfügung gestellt.

Ausdrücklich hinzuweisen ist in diesem Zusammenhang darauf, daß es zur Durchführung des erfindungsgemäßen Verfahrens es prinzipiell bereits ausreicht, lediglich die Drehmomentbelastung des Elektromotors 2 zu erfassen und in Form eines Ist-Signales 59 zur Verfügung zu stellen. Die anderen beiden Sensorsignale 60, 61 dienen lediglich für ein noch sichereres Abschalten des Elektromotors und sind damit redundant.

Das Ist-Signal 59, das die Drehmomentbelastung des Elektromotors 2 repräsentiert, wird im Ausführungsbeispiel von Figur 3 durch Einsatz einer Phasendifferenzmeßeinrichtung 47 zur Verfügung gestellt. Diese Phasendifferenzmeßeinrichtung 47, die eingangsseitig mit den Motoranschlüssen 7 und 8 in Verbindung steht, erfaßt den durch die beiden Motorwicklungen 4, 5 fließenden Strom und dessen Phasenverschiebung. Die Phasenverschiebung ist ein Maß für die augenblickliche Drehmomentbelastung des Elektromotors 2. Ein separater Sensor, der möglicherweise umständlich an der Antriebswelle des Elektromotors 2 befestigt werden muß, ist deshalb entbehrlich.

Des weiteren ist in Figur 3 noch eine Stromvervorgungseinrichtung 45 dargestellt, die eingangsseitig mit den Zuleitungsanschlüssen 41, 42, 43 der Zuleitung 40 in Verbindung steht. Die Stromversorgungseinrichtung 45 dient zur Stromversorgung des Datenspeichers 25, der Steuereinrichtung 21 sowie der Leistungsschalteinrichtung 50. Schließlich steht die Steuereinrichtung 21 über ein Signalanpaßteil 48 mit den beiden Zuleitungsanschlüssen 41 und 42 in Verbindung.

Die Funktionsweise eines solchen Antriebes 1 stellt sich folgendermaßen dar:

Nach dem Einschalten wird die Versorgungsspannung für den Elektromotor 2 und damit die Spannung in der Zuleitung 40 von der Steuereinrichtung 21 erfaßt. Entsprechend dieser Versorgungsspannung wird ein dem Nennmoment des Elektromotors 2 entsprechender Phasenverschiebungsmaximalwert aus einer im vorzugsweise nichtflüchtigen Datenspeicher 25 hinterlegten, auf den Elektromotor 2 abgestimmten Tabelle eingelesen. Wird dieser Phasenverschiebungsmaximalwert während der Bewegung des Rolladens oder dergleichen überschritten, steuert die Steuereinrichtung 21 die Leistungsschalteinrichtung 50 so, daß der Elektromotor 2 abgeschaltet wird. Darüber hinaus erfaßt die Steuereinrichtung 21 nicht nur eine Überschreitung des Phasenverschiebungsmaximalwertes und damit die Überschreitung eines vorgegebenen Drehmomentes, sondem auch bei Überschreitung einer vorgegebenen Drehmomentänderung und damit vorgegebenen Phasenverschiebungsänderung. Hierzu wird nach dem Einschalten der Versorgungsspannung die Phasenverschiebung zwischen den beiden Motorwicklungen 4, 5, erfaßt. Dieser Meßwert wird gespeichert und ständig aktualisiert. Nach einem vorgegebenen Zeitintervall wird der neue aktuelle Wert der Phasenverschiebung ebenfalls gespeichert. Bei Überschreitung einer vorgegebenen, maximal zulässigen Phasenverschiebungsänderung in bezug auf den unmittelbar zuvor gespeicherten Phasenverschiebungswert, generiert die Steuereinrichtung 21 auf ihren beiden Steuerleitungen 53, 54 ein Signal zum Öffnen der Schalteinrichtungen 51, 52 und damit zum Abschalten des Elektromotors 2.

Bei einer schnellen Änderung der Phasenverschiebung und damit einer hohen Drehmomentänderung, die auf ein Verklemmen oder Anschlagen des Rolladens oder dergleichen hinweist, wird dieser sicher angehalten.

Neben der Erfassung der Drehmomentbelastung des Elektromotors 2 wird vorteilhafterweise auch die Drehzahl der Wickelwelle als Abschaltkriterium erfaßt. Hierbei dreht der Wickelwellenmitnahmering 14 über den Antrieb 30 den mehrpoligen, beispielsweise 16poligen, Ringmagneten 23 an. Dieser bewirkt bei Drehung eine bestimmte Impulsfolge am Ausgang eines in der Nähe des Ringmagneten 23 angeordneten magnetischen Sensors, z. B. Hallsensors 24. Die Pausenzeit der Impulsfolge am Ausgang des Hallsensors 24 ist umgekehrt proportional zur Drehzahl des Wickelwellenmitnahmerings 14 und somit abhängig von der Bewegung des angetriebenen Rolladens oder dergleichen. Die Pausenzeit dieses Signales triggert ähnlich einer sogenannten Watch-Dog-Schaltung eine in der Steuereinrichtung 21 ablaufende Überwachungszeit. Dreht sich der Winkelwellenmitnahmering 14 und damit die Wikkelwelle zu langsam oder gar nicht, läuft diese Zeit ab. Der Elektromotor 2 wird dann abgeschaltet und diese Drehrichtung gesperrt. Dazu werden die zuvor angefallenen Daten in den nichtflüchtigen Datenspeicher25 geschrieben. Wird innerhalb eines vorgegebenen Zeitraumes eine vorgegebene Impulszahl des Drehzahlsensors 22 überschritten, wird die Drehrichtungssperre aufgehoben und der Antrieb erneuert.

In einer Weiterbildung der Erfindung hat die Überwachungszeit des Hallsensorsignales, je nach Betriebszustand des Elektromotors 2, unterschiedliche Längen. Im normalen freien Betrieb, d. h. nicht Anschlag oben und nicht Anschlag unten, und es sind keine Richtungssperren aktiv, ist diese Überwachungszeit so gewählt, daß die Drehzahl der Wickelwelle nicht unter etwa 90 % der Nenndrehzahl sinken darf. Nach einem Abschalten des Elektromotors 2 in seiner unteren Endlage, bei der der Austrieb 9 der Antriebswelle 11 bei Stillstehen der Wickelwelle weitergedreht hat, gilt für den Zeitraum bis die Drehrichtungssperre wieder aufgehoben ist, eine Überwachungszeit, die mindestens das vorhandene Spiel 17 überdreht. In seiner oberen Endlage und damit nach einem Abschalten des Elektromotors 2 durch die erfaßte Phasenverschiebung, gilt für den Zeitraum, bis die Drehrichtungssperre wieder aufgehoben ist, eine Überwachungszeit, die ein mehrfaches des vorhandenen Spiels überdreht, wobei eine bestimmte Anzahl von Impulsen am Ausgang des Hallsensors gezählt sein müssen, um das Weiterlaufen des Antriebes zu gewährleisten.

Ist eine Drehrichtungssperre, die jedoch nicht notwendigerweise vorgesehen werden muß, jedoch aus Sicherheitsgründen von Vorteil ist, aktiv, kann der Elektromotor 2 nur in Gegenrichtung gefahren werden. Der Elektromotor 2 dreht dann aus dem eingebauten Spiel 17 zwischen Wickelwellenkupplung 15 und Austrieb 9 der Antriebswelle. Nach mehreren Flankenwechseln des Ausgangssignales des Hallsensors 24 in Gegenrichtung istjedoch sichergestellt, daß das eingebaute Spiel 17 wieder voll genutzt werden kann und die zuvor gesperrte Drehrichtung dann von der Steuereinrichtung 21 wieder freigegeben wird.

In vorteilhafter Weise sorgt die Steuereinrichtung 21 dafür, daß der Elektromotor 2 eine Drehrichtungsumkehr nur akzeptiert, wenn zwischen den Steuerbefehlen mindestens eine bestimmte Stillstandszeit liegt. Diese Stillstandszeit kann z. B. 300 ms betragen. Wird vor Ablauf dieser Stillstandszeit ein neuer Steuerbefehl von der Steuereinrichtung 21 erzeugt, bleibt der Elektromotor stehen, bis ein neuer Steuerbefehl nach Ablauf dieser Stillstandszeit erfolgt.

Darüber hinaus hat es sich als günstig erwiesen, daß die Einschaltdauer für den Elektromotor 2 eine vorgegebene Mindestzeit einhalten muß. Kürzere Einschaltdauern werden dagegen ignoriert. Die notwendige Mindesteinschaltdauer ist so zu wählen, daß die zur Datenspeicherung benötigte Pufferenergie immer vorhanden ist. Die Mindesteinschaltdauer kann beispielsweise bei 300 ms liegen.

Ist eine Drehrichtungssperre aufgrund der Phasenverschiebung noch aktiv, müssen die beiden darauffolgenden Drehrichtungsbefehle vorteilhafterweise eine Mindestlänge aufweisen. Andernfalls wird die Drehrichtungssperre aufgehoben und die der Gegenrichtung gesetzt. Dies stellt sicher, daß nicht durch Spielerei das eingebaute Spiel zwischen Wickelwellenkupplung und Austrieb der Antriebswelle umgangen werden kann.

Wird der Einsteckrohrantrieb 1 gemäß den Figuren 1 bis 3 in einen Rolladen eingebaut, so gilt für die Auf- und Abwärtsbewegung folgendes: Bei der Aufwärtsbewegung zieht der Elektromotor 2 zunächst den Rolladen nach oben. Während dieser Fahrt erhöht sich im unteren Drittel der zurückzulegenden Wegstrecke das Drehmoment stetig und nimmt nach oben hin wieder ab. Dieser Drehmomentveränderung folgt die erfindungsgemäße Steuereinrichtung. Erreicht der Rolladen das obere Ende, baut sich ruckartig an einer vorgesehenen Anschlagschiene ein hohes Drehmoment auf. Dies wird von der Steuereinrichtung 21 erfaßt. Der Elektromotor 2 wird abgeschaltet, und er reagiert auf einen weiteren Aufbefehl nicht mehr.

Bei der Abwärtsbewegung läuft der Rolladen nach unten, wobei sein Gewicht, vorausgesetzt das Gewicht ist ausreichend, die Antriebswelle mitzieht. Der Elektromotor 2 wird durch das Gewicht des Rolladens praktisch generatormäßig mitgedreht. Kommt der Rolladen durch ein Hindernis oder durch den unteren Anschlag zum Stillstand, bleibt der Wickelwellenmitnahmering 14 stehen. Der Elektromotor 2 wird abgeschaltet und reagiert auf keinen weiteren Abbefehl mehr.

Das Verfahren und die Vorrichtung nach der Erfindung erlauben die Verwendung von Serienmitnahmekupplungen und Serienwandankem, da von außen her gesehen keine baulichen Veränderungen des Antriebes gegenüber den bisher bekannten Antrieben zur elektromotorischen Betätigung von Rolläden notwendig ist. Der vorgestellte Antrieb benötigt darüber hinaus lediglich die gleichen Anschlußleitungen wie die bisher bekannten Rolladenmotoren. In vorteilhafter weise erlaubt die Erfindung das Paralellschalten von mehreren Motoren.

Anzumerken ist abschließend, daß der im Zusammenhang mit der Phasenverschiebung erwähnte Motorkondensator 3 auch durch jede andere Einrichtung, die zu einer Phasenverschiebung der Ströme durch die mindestens zwei Motorwicklungen 4, 5 führt, ersetzt werden kann. So kann z. B. eine weitere Motorinduktivität anstatt des Motorkondensators 3 zwischen die Motorwicklungen 4, 5 geschaltet werden.

### Bezugszeichenliste

- 1: Antrieb, Einschubrohrantrieb
- 2: Elektromotor
- 3: Motorkondensator
- 4: Motorwicklung
- 5: Motorwicklung
- 6: Motoranschluß
- 7: Motoranschluß
- 8: Motoranschluß
- 9: Motoraustrieb
- 10: Getriebe
- 11: Antriebswelle
- 12: rohrförmiges Gehäuse
- 13: Wickelwelle
- 14: Wickelwellenmitnahmering
- 15: Wickelwellenkupplung
- 16: Öffnung
- 17: Spiel
- 18: Deckelteil
- 19: Deckelteil
- 20: Elektronik
- 21: Steuereinrichtung
- 22: erste Drehzahlsensoreinrichtung
- 23: Ringmagnet
- 24: Hallsensor
- 25: Datenspeicher
- 27: zweite Drehzahlsensoreinrichtung
- 30: Antrieb
- 40: Zuleitung
- 41: Zuleitungsanschluß
- 42: Zuleitungsanschluß
- 43: Zuleitungsanschiuß
- 45: Stromversorgungseinrichtung
- 47: Phasendifferenzmeßeinrichtung
- 48: Signalanpaßteil
- 50: Leistungs-Schalteinrichtung
- 51: Schaltereinrichtung
- 52: Schaltereinrichtung
- 53: Steuerleitung
- 54: Steuerleitung
- 55: Versorgungsleitung
- 56: Leitung
- 59: Ist-Signal
- 60: Sensorsignal
- 61: Sensorsignal
- 62: Motorthermostat

## Patentansprüche

1. Verfahren zur Stillstandssteuerung von einen Elektromotor (2) enthaltenden Antrieben für Rolläden, Rolltore, Jalousien, Markisen, Filmleinwänden und dergleichen, mit einer Wickelwelle (13), bei welchem Verfahren der Elektromotor (2) abgeschaltet wird, sobald der Antrieb einen mechanischen Widerstand erfasst, wobei das Drehmoment des Elektromotors (2) bei eingeschaltetem Elektromotor (2) laufend elektronisch erfasst und der Elektromotor (2) bei Überschreitung eines vorgegebenen Drehmomentes oder bei Überschreitung einer vorgegebenen Drehmomentänderung abgeschaltet wird,
**dadurch gekennzeichnet, dass** nach dem Abschalten des Elektromotors (2) aufgrund einer Unterschreitung der vorgegebenen Drehzahl der Wikkelwelle (13), einer Überschreitung eines vorgegebenen Drehmomentes des Elektromotors (2) oder der vorgegebenen Drehmomentänderung des Elektromotors (2) die unmittelbar vor dem Abschalten geltende Drehrichtung des Elektromotors (2) gesperrt wird.

2. Verfahren nach Anspruch 1, **dadurch gekennzeichnet, daß** das vorgegebene Drehmoment, bei dessen Überschreitung der Elektromotor (2) abgeschaltet wird, aus einer in einem nichtflüchtigen Datenspeicher (25) hinterlegten und auf den Elektromotor (2) abgestimmten und die aktuelle Betriebsspannung des Elektromotors (2) berücksichtigenden Tabelle in eine Steuereinrichtung (21) eingele-sen wird.

3. Verfahren nach Anspruch 1 oder 2 **dadurch gekennzeichnet, daß** der Elektromotor (2) einen Motorkondensator (3) und mindestens zwei Motorwicklungen (4, 5) aufweist und zur Erfassung des Drehmomentes die Phasenverschiebung des durch die mindestens zwei Motorwicklungen (4, 5) fließenden Stromes ausgewertet wird.

4. Verfahren nach Anspruch 3, **dadurch gekennzeichnet, daß** nach dem Einschalten des Elektromotors (2) die Phasenverschiebung zwischen den mindestens zwei Motorwicklungen (4, 5) erfaßt und gespeichert wird, daß anschließend dieser gespeicherte Wert ständig aktualisiert wird, indem nach einem vorgegebenem Zeitintervall ein neuer aktueller Wert gespeichert wird, und daß der Elektromotor bei Überschreiten einer vorgegebenen maximal zulässigen Phasenverschiebungsänderung in bezug auf den unmittelbar zuvor gespeicherten Phasenverschiebungswert abgeschaltet wird.

5. Verfahren nach Anspruch 4, **dadurch gekennzeichnet, daß** das vorgegebene Zeitintervall in etwa 100 bis 800 ms beträgt.

6. Verfahren nach einem der Ansprüche 1 bis 5, **dadurch gekennzeichnet, daß** der Rolladen oder dergleichen auf einer Wickelwelle (13) sitzt und mit dem Antrieb (1) über eine Wickelwellenkupplung (15) in Verbindung steht, daß die Drehzahl der Wikkelwelle (13) erfaßt wird, und daß bei Unterschreitung einer vorgegebenen Drehzahl der Wickelwelle (13) der Elektromotor (2) abgeschaltet wird.

7. Verfahren nach Anspruch 6, **dadurch gekennzeichnet, daß** die vorgegebene Drehzahl der Wikkelwelle (13), bei der der Elektromotor (2) abgeschaltet wird, in Abhängigkeit der augenblicklichen Stellung des Rolladen oder dergleichen veränderbar ist.

8. Verfahren nach einem der Ansprüche 6 bis 8, **dadurch gekennzeichnet, daß** zwischen der Wickelwelle (13) und einer vom Antrieb (1) unmittelbar angetriebenen Antriebswelle (11) ein mechanisches Spiel (17) eingebaut ist, durch welches die Antriebswelle (11) trotz stehender Wickelwelle (13) um das Spiel (17) weiterdrehbar ist und das Weiterdrehen der Antriebswelle (11) bei Stillstehen der Wikkelwelle (13) als Kriterium zum Abschalten des Elektromotors (2) herangezogen wird.

9. Vorrichtung zur Stillstandssteuerung eines einen Elektromotor (2) enthaltenden Antriebes (1) für Rolläden, Rolltore, Jalousien, Markisen, Filmleinwänden und dergleichen, mit einer Stromversorgungseinrichtung (45), einer Schalteinrichtung (50) zum Ein- und Ausschalten des Elektromotors (2) und einer Steuereinrichtung (21) zum Abschalten des Elektromotors durch die Schalteinrichtung (50) sobald der Antrieb einen mechanischen widerstand erfaßt, wobei eine elektronische Einrichtung (27; 47) zur Erfassung der Drehbewegung des Elektromotors (2) vorgesehen ist und diese elektronische Einrichtung (22; 47) mit der Steuereinrichtung (21) verbunden ist und dieser ein ist Signal (59) für die aktuelle Drehbewegung des Elektromotors (2) zuführt, und wobei die Steuereinrichtung (21) dieses lst-Signal (59) mit einem vorgegebenen Referenzsignal vergleicht und bei einer vorgegebenen Abweichung die Schalteinrichtung (50) zum Abschalten des Elektromotors betätigt, **dadurch gekennzeichnet, dass** nach einem Abschalten des Elektromotors (2) aufgrund einer Unterschreitung einer vorgegebenen Drehzahl einer Wickelwelle (13), einer Überschreitung eines vorgegebenen Drehmomentes des Elektromotors oder einer vorgegebenen Drehmomentänderung des Elektromotors die unmittelbar vor dem Abschalten geltende Drehrichtung des Elektromotors (2) gesperrt ist.

10. Vorrichtung nach Anspruch 10, **dadurch gekennzeichnet, daß** die Steuereinrichtung (21) ein Mikrocontroller ist, der auf einen Datenspeicher (25) Zugriff hat.

11. Vorrichtung nach Anspruch 10 oder 11, **dadurch gekennzeichnet, daß** der Elektromotor (2) mindestens zwei Motorwicklungen (4, 5) und einen Motorkondensator (3) aufweist, und daß die elektronische Einrichtung (22; 47) eine Phasendifferenzmeßeinrichtung (47) zum Erfassen der Phasenverschiebung des durch die mindestens zwei Motorwicklungen (4, 5) des Elektromotors (2) fließenden Stromes ist.

12. Vorrichtung nach einem der Ansprüche 10 bis 12, **dadurch gekennzeichnet, daß** die Steuereinrichtung (21) mit einer Drehzahlerfassungseinrichtung (22) zum Erfassen der Drehzahl der Wickelwelle (13), auf der der Rolladen oder dergleichen angeordnet ist, verbunden ist, und daß die Wickelwelle (13) über eine Wickelwellenkupplung (15) mit der Antriebswelle (11) des Antriebs (1) verbunden ist, und daß durch die Steuereinrichtung (21) in Abhängigkeit eines Ausgangssignales dieser Drehzahlerfassungseinrichtung (22) die Stromversorgung für den Elektromotor (2) über die Schalteinrichtung (50) abschaltbar ist.

13. Vorrichtung Anspruch 13, **dadurch gekennzeichnet, daß** die Drehzahlerfassungseinrichtung (22) einen mit der Wickelwelle (13) drehfest verbundenen und mehrpoligen Ringmagneten (23) und einen Hallsensor (24) zum Erfassen der durch den Ringmagneten (23) erzeugbaren Magnetfeldänderung aufweist.

14. Vorrichtung nach einem der Ansprüche 10 bis 14, **dadurch gekennzeichnet, daß** der Antrieb (1) als Einsteckrohrantrieb ausgebildet ist, in dessen Rohr die zur Steuerung der Stillstandsüberwachung notwendige Elektronik (20) untergebracht ist.

15. Vorrichtung nach Anspruch 15, **dadurch gekennzeichnet, daß** der Einsteckrohrantrieb (1) mit einer Wickelwellenkupplung (15) versehen ist, die unter mechanischem Spiel (17) mit der Antriebswelle (11) des Antriebes (1) verbunden ist, daß auf der Wikkelwellenkupplung (15) die Wickelwelle (13) in Form eines Wickelwellenrohres aufsitzt, daß innerhalb dieses Wickelwellenrohres der Einsteckrohrantrieb (1) angeordnet ist, und daß das Wickelwellenrohr über einen Wickelwellenmitnahmering (14) auf dem Einsteckrohrantrieb (1) aufsitzt, wobei die Drehzahlerfassungseinrichtung (22) zum Erfassen der Drehzahl der Wickelwelle (13) die Drehzahl des Wickelwellenmitnahmeringes (14) erfaßt.

16. Vorrichtung nach Anspruch 16, **dadurch gekennzeichnet, daß** die Wickelwellenkupplung (15) ein auf einem Austrieb (30) der Antriebswelle (11) sitzender plattenförmiger Ring ist, daß der Austrieb (30) durch eine zentrale Öffnung (16) des plattenförmigen Ringes ragt, und daß der Austrieb (30) in dem innerhalb der Öffnung (16) liegenden Bereich einen Querschnitt aufweist, der eine begrenzte Drehbewegung des Austriebes (30) erlaubt.

17. Vorrichtung nach Anspruch 17, **dadurch gekennzeichnet, daß** die zentrale Öffnung des plattenförmigen Ringes in etwa rechteckförmig gestaltet ist und der Querschnitt des Austriebes (9) der Antriebswelle (11) eine in etwa trapezförmige Form aufweist.

18. Vorrichtung nach einem der Ansprüche 16 bis 18, **dadurch gekennzeichnet, daß** das mechanische Spiel (17) etwa 20 bis 40° beträgt.

## Claims

1. A method for the controlling the stopping of drives containing an electric motor for roller shutters, sliding doors, slatted shutters, awnings, film screens and the like, having a winding shaft (13), in which method the electric motor (2) is switched off as soon as the drive records a mechanical resistance, whereby the torque of the electric motor (2) is continuously electronically recorded when the electric motor (2) is switched on and the electric motor (2) is switched off when a predetermined torque is exceeded or when a predetermined change in torque is exceeded,
**characterised in that** after the electric motor is switched off by virtue of the predetermined speed of the winding shaft (13) not being reached, a predetermined torque of the electric motor (2) or the predetermined change in torque of the electric motor being exceeded, the direction of rotation of the electric motor (2) which applies directly before switching off is blocked.

2. A method according to Claim 1,
**characterised in that** the predetermined torque, which triggers the switching off of the electric motor (2) when it is exceeded, is read into a control mechanism (21) from a table which is deposited in a non-volatile data memory (25) and is matched to the electric motor (2) and takes into consideration the current operating voltage of the electric motor (2).

3. A method according to Claim 1 or 2,
**characterised in that** the electric motor (2) comprises a motor condenser (3) and at least two motor windings (4, 5) and for recording the torque the phase shift of the current flowing through the at least two motor windings (4, 5) is evaluated.

4. A method according to Claim 3,
**characterised in that** after the electric motor (2) has been switched off, the phase shift between the at least two motor windings (4, 5) is recorded and stored,
**in that** then this stored value is constantly updated by a new current value being stored after a predetermined time interval,
and **in that** the electric motor is switched off when a predetermined maximum permissible change in phase shift is exceeded with respect to the phase shift value stored immediately before it.

5. A method according to Claim 4,
**characterised in that** the predetermined time interval is roughly 100 to 800 ms.

6. A method according to one of Claims 1 to 5,
**characterised in that** the roller shutter or the like is seated on a winding shaft (13) and communicates with the drive (1) via a winding shaft coupling (15),
**in that** the speed of the winding shaft (13) is recorded,
and **in that** the electric motor (2) is switched off when a predetermined speed of the winding shaft (13) is fallen short of.

7. A method according to Claim 6,
**characterised in that** the predetermined speed of the winding shaft (13) at which the electric motor (2) is switched off can be altered as a function of the instantaneous position of the roller shutter or the like.

8. A method according to one of Claims 6 to 8,
**characterised in that** between the winding shaft (13) and a drive shaft (11) directly driven by the drive (1) a mechanical backlash (17) is installed, by which the drive shaft (11) can be further rotated around the backlash (17) in spite of the stationary winding shaft (13) and the further rotation of the drive shaft (11) during the stopping of the winding shaft (13) is used as a criterion for switching off the electric motor.

9. An apparatus for controlling the stopping of a drive (1) containing an electric motor (2) for roller shutters, sliding doors, slatted shutters, awnings, film screens and the like, having a current supply device (45), a switching device (50) for switching on and off the electric motor (2) and a control mechanism (21) for switching off the electric motor (2) by the switching device (50) as soon as said drive (1) records a mechanical resistance, wherein an electronic device (27; 47) for recording the rotational movement of the electric motor (2) is provided and this electronic device (22; 47) is connected to the control mechanism (21) and this supplies an actual signal (59) for the current rotational movement of the electric motor (2), and wherein the control mechanism (21) compares this actual signal (59) with a predetermined reference signal and in the event of a predetermined deviation actuates the switching device to switch off the electric motor,
**characterised in that** after the electric motor (2) has been switched off by virtue of a predetermined speed of a winding shaft (13) not being reached, a predetermined torque of the electric motor or a predetermined change in torque of the electric motor being exceeded, the direction of rotation of the electric motor which applies directly before switching off is blocked.

10. An apparatus according to Claim 10,
**characterised in that** the control mechanism (21) is a microcontroller which has access to a data memory (25).

11. An apparatus according to Claim 10 or 11,
**characterised in that** the electric motor (2) comprises at least two motor windings (4, 5) and a motor condenser (3),
and **in that** the electronic device (22; 47) is a phase difference measuring instrument (47) for recording the phase shift of the current flowing through the at least two motor windings (4, 5) of the electric motor (2).

12. An apparatus according to one Claims 10 to 12,
**characterised in that** the control mechanism (21) is connected to a speed recording mechanism (22) for recording the speed of the winding shaft (13), on which the roller shutter or the like is disposed,
and **in that** the winding shaft (13) is connected via a winding shaft coupling (15) to the drive shaft (11) of the drive (1),
and **in that** by the control mechanism (21) as a function of an output signal of this speed recording device (22) the current supply for the electric motor (2) can be switched off via the switching device (50).

13. An apparatus according to Claim,
**characterised in that** speed recording device (22) comprises a multi-pole ring magnet (23) connected fixed in rotation to the winding shaft (13) and a Hall sensor (24) for recording the change in magnetic field which can be produced by the ring magnet.

14. An apparatus according to one of Claims 10 to 14,
**characterised in that** the drive (1) is constructed as a spigot drive, in the tube of which the electronics (20) required for controlling the monitoring of the stopping are housed.

15. An apparatus according to Claim 15,
**characterised in that** the spigot drive (1) is provided with a winding shaft coupling (15), which is connected under mechanical backlash (17) with the drive shaft (11) of the drive (1),
**in that** the winding shaft (13) is seated in the form of a winding shaft tube on the winding shaft coupling (15),
**in that** the spigot drive (1) is disposed inside this winding shaft tube,
and **in that** the winding shaft tube is seated via a winding shaft carrier ring (14) on the spigot drive (1), wherein the speed recording instrument (22) for recording the speed of the winding shaft (13) records the speed of the winding shaft carrier ring (14).

16. An apparatus according to Claim 16,
**characterised in that** the winding shaft coupling (15) is a plate-shaped ring seated on an extension (30) of the drive shaft (11),
**in that** the extension (30) projects through a central opening (16) in the plate-shaped ring,
and **in that** the extension (30) in the region lying inside the opening (16) has a cross section which permits a limited rotational movement of the extension (30).

17. An apparatus according to Claim 17,
**characterised in that** the central opening of the plate-shaped ring has a roughly rectangular design and the cross section of the drive extension (9) of the drive shaft (11) has a roughly trapezoidal shape.

18. An apparatus according to one of Claims 16 to 18,
**characterised in that** the mechanical backlash (17) is roughly 20 to 40°.

## Revendications

1. Procédé pour contrôler l'arrêt d'entraînements contenant un moteur électrique (2) pour des volets roulants, des portails roulants, des jalousies, des stores, des écrans de toile perlée et similaires, doté d'un arbre d'enroulement (13), selon lequel le moteur électrique (2) est coupé dès que l'entraînement enregistre une résistance mécanique, le couple de rotation du moteur électrique (2) étant enregistré électroniquement en permanence lorsque le moteur électrique (2) est allumé et le moteur électrique (2) étant coupé lors d'un dépassement d'un couple de rotation donné ou d'une modification du couple de rotation donnée,
**caractérisé en ce que**
la direction de rotation du moteur électrique (2) précédant directement la coupure est bloquée après la coupure du moteur électrique (2), en raison d'un dépassement sous une vitesse de rotation de l'arbre d'enroulement (13) donnée, du dépassement du couple de rotation donné du moteur électrique (2) ou du dépassement de la modification donnée du couple de rotation du moteur électrique (2).

2. Procédé selon la revendication 1,
**caractérisé en ce que**
le couple de rotation donné dont le dépassement entraîne la coupure du moteur électrique (2) est lu dans un module de commande (21) à partir d'un tableau tenant compte de la tension de fonctionnement actuelle du moteur électrique (2), synchronisé sur le moteur électrique (2) et mémorisé dans une mémoire d'information (25) non volatile.

3. Procédé selon la revendication 1 ou 2,
**caractérisé en ce que**
le moteur électrique (2) présente un condensateur à moteur (3) et au moins deux bobines de moteur (4, 5), et le déphasage du courant traversant deux bobines de moteur (4, 5) au moins est évalué pour déterminer le couple de rotation.

4. Procédé selon la revendication 3,
**caractérisé en ce que**
le déphasage entre deux bobines de moteur (4, 5) au moins est détecté et enregistré après la mise en marche du moteur électrique (2), cette valeur enregistrée est ensuite mise à jour en permanence par l'enregistrement d'une nouvelle valeur actuelle après un intervalle de temps donné, et le moteur électrique est coupé si une modification donnée du déphasage maximum admis est supérieure à la valeur de déphasage venant d'être enregistrée.

5. Procédé selon la revendication 4,
**caractérisé en ce que**
l'intervalle de temps donné est d'environ 100 à 800 ms.

6. Procédé selon l'une des revendications 1 à 5,
**caractérisé en ce que**
le volet roulant ou similaire se trouve sur un arbre d'enroulement (13) et qu'il est relié à l'entraînement (1) via un accouplement de l'arbre d'enroulement (15), la vitesse de rotation de l'arbre d'enroulement (13) est enregistrée, et le moteur électrique (2) est coupé lors du dépassement sous une vitesse de rotation donnée de l'arbre d'enroulement (13).

7. Procédé selon la revendication 6,
**caractérisé en ce que**
la vitesse de rotation donnée de l'arbre d'enroulement (13) à laquelle le moteur électrique (2) est coupé peut être modifiée en fonction de la position momentanée du volet roulant ou similaire.

8. Procédé selon la revendication 6 ou 7,
**caractérisé en ce qu'**
un jeu mécanique (17) est monté entre l'arbre d'enroulement (13) et un arbre de transmission directement entraîné par l'entraînement (1), ce jeu permettant ainsi à l'arbre de transmission (11) de tourner autour du jeu (17) malgré l'arrêt de l'arbre d'enroulement (13), et la rotation continue de l'arbre de transmission (11) en cas d'arrêt de l'arbre d'enroulement (13) servant de critère pour couper le moteur électrique (2).

9. Dispositif pour contrôler l'arrêt d'un entraînement (1) comprenant un moteur électrique (2) pour des volets roulants, des portails roulants, des jalousies, des stores, des écrans de toile perlée et similaires, doté d'un dispositif d'alimentation en courant électrique (45), d'un mécanisme de couplage (50) pour mettre en marche et couper le moteur électrique (2) et un module de commande (21) pour couper le moteur électrique (2) le mécanisme de couplage (50) dès que l'entraînement enregistre une résistance mécanique, un dispositif électronique (27 ; 47) étant prévu pour déterminer le mouvement de rotation du moteur électrique (2), ce dispositif électronique (22 ; 47) étant relié au module de commande (21) auquel il envoie un signal réel (59) pour le mouvement de rotation actuel du moteur électrique (2), le module de commande (21) comparant ce signal réel (59) à un signal de référence donné et actionnant le mécanisme de couplage (50) pour couper le moteur électrique en cas d'écart donné,
**caractérisé en ce que**
la dernière direction de rotation du moteur électrique (2) juste avant la coupure est bloquée, après une coupure du moteur électrique (2) en raison d'un dépassement sous une vitesse de rotation donnée de l'arbre d'enroulement (13), du dépassement d'un couple de rotation donné du moteur électrique ou d'une modification donnée du couple de rotation du moteur électrique (2).

10. Dispositif selon la revendication 9,
**caractérisé en ce que**
le module de commande (21) est un microcontrôleur qui a accès à une mémoire d'informations (25).

11. Dispositif selon la revendication 9 ou 10,
**caractérisé en ce que**
le moteur électrique (2) présente au moins deux bobines de moteur (4, 5) et un condensateur de moteur (3) et le dispositif électronique (22 ; 47) est un système de mesure du déphasage (47) permettant de détecter le déphasage du courant traversant deux bobines (4, 5) au moins du moteur électrique (2).

12. Dispositif selon l'une des revendications 9 à 11,
**caractérisé en ce que**
le module de commande (21) est relié à un dispositif de détection de la vitesse de rotation (22) permettant d'enregistrer la vitesse de rotation de l'arbre d'enroulement (13) sur lequel le volet roulant ou similaire est disposé, l'arbre d'enroulement (13) est relié à l'arbre de transmission (11) de l'entraînement (1) via un accouplement de l'arbre d'enroulement (15), et le module de commande (21) permet de couper l'alimentation électrique en courant du moteur électrique (2) via le mécanisme de couplage (50) en fonction du signal initial de ce dispositif de détection de la vitesse de rotation (22).

13. Dispositif selon la revendication 12,
**caractérisé en ce que**
le dispositif de détection de la vitesse de rotation (22) présente un aimant torique (23) multipolaire relié sans rotation possible à l'arbre d'enroulement (13) et un capteur à effet Hall (24) pour détecter la modification du champ magnétique pouvant être générée par l'aimant torique (23).

14. Dispositif selon l'une des revendications 9 à 13,
**caractérisé en ce que**
l'entraînement (1) est construit sous forme d'entraînement à tube à emboîter dont le tube contient l'électronique (20) nécessaire pour commander le contrôle de l'arrêt.

15. Dispositif selon la revendication 14,
**caractérisé en ce que**
l'entraînement à tube à emboîter (1) est pourvu d'un accouplement de l'arbre d'enroulement (15) relié à l'arbre de transmission (11) de l'entraînement (1) par un jeu mécanique (17), l'arbre d'enroulement (13) se trouve sur l'accouplement de l'arbre d'enroulement (15) sous la forme d'un tuyau d'arbre d'enroulement, l'entraînement à tube à emboîter (1) est disposé dans ce tuyau d'arbre d'enroulement et le tuyau d'arbre d'enroulement se trouve sur l'entraînement à tube à emboîter (1) via une bague entraîneuse de l'arbre d'enroulement (14), le dispositif de détection de la vitesse de rotation (22) pour enregistrer la vitesse de rotation de l'arbre d'enroulement (13) enregistrant la vitesse de rotation de la bague entraîneuse de l'arbre d'enroulement (14).

16. Dispositif selon la revendication 15,
**caractérisé en ce que**
l'accouplement de l'arbre d'enroulement (15) est une bague en forme de plateau se trouvant sur un arbre de sortie (30) de l'arbre de transmission (11), l'arbre de sortie (30) traverse une ouverture centrale (16) de la bague en forme de plateau, et l'arbre de sortie (30) dans une zone se trouvant à l'intérieur de l'ouverture (16) présente une section transversale permettant un mouvement de rotation limité de l'arbre de sortie (30).

17. Dispositif selon la revendication 16,
**caractérisé en ce que**
l'ouverture centrale de la bague en forme de plateau est plus ou moins rectangulaire, et la section transversale de l'arbre de sortie (30) de l'arbre de transmission (11) présente une forme plus ou moins trapézoïdale.

18. Dispositif selon l'une des revendications 15 à 17,
**caractérisé en ce que**
le jeu mécanique (17) est d'environ 20 à 40°.
